# EUROPEAN PATENT APPLICATION

(11) **EP 3 699 713 A1**
(43) Date of publication of application: **26.08.2020**
(21) Application number: 20158273.1
(22) Date of filing: 19.02.2020
(51) Int. Cl.: G05D 1/00

(54) **METHOD, APPARATUS AND DEVICE FOR CONTROLLING DRIVERLESS VEHICLE, AND COMPUTER READABLE MEDIUM**

(30) Priority: 19.02.2019 CN 201910122817
(71) Applicant: Baidu Online Network Technology (Beijing) Co., Ltd., Beijing 100085 (CN)
(72) Inventor: TAN, Yinong, Beijing 100085 (CN)
(74) Representative: Bittner, Bernhard

(57) **Abstract**

A method for controlling a driverless vehicle is provided according to an embodiment of the disclosure. The method includes: establishing a connection with a handheld control device; upon receiving a switching instruction of entering a handheld control from the handheld control device, stopping an automatic control of the driverless vehicle; and upon receiving a vehicle control instruction from the handheld control device, performing an operation corresponding to the vehicle control instruction on the driverless vehicle. According to the embodiment of the disclosure, the handheld control device is adopted to control the driverless vehicle, so that an operation can be performed when the driverless vehicle cannot travel automatically or a sensing module fails, thereby improving the convenience and safety of the user's operation.

## Description

### TECHNICAL FIELD

The technical field relates to the technology of driverless vehicles, and particularly to a method, apparatus and device for controlling a driverless vehicle, and a computer readable medium.

### BACKGROUND

A driverless vehicle, especially a public transport vehicle, does not have a steering wheel, an accelerator or a brake pedal in actual running scenes. Therefore, when the driverless vehicle is blocked by an obstacle or has any other fault, it is necessary to provide an operating person with a quick operation mode, so as to temporarily move the vehicle to ensure the continuous and smooth running of the driverless vehicle.

### SUMMARY

A method, apparatus and device for controlling a driverless vehicle, and a computer readable medium are provided according to embodiments of the present disclosure, so as to at least solve or alleviate one or more technical problems in the existing technology.

In a first aspect, a method for controlling a driverless vehicle is provided according to an embodiment of the present disclosure, which includes:
establishing a connection with a handheld control device;
upon receiving a switching instruction of entering a handheld control from the handheld control device, stopping an automatic control of the driverless vehicle; and
upon receiving a vehicle control instruction from the handheld control device, performing an operation corresponding to the vehicle control instruction on the driverless vehicle.

In one embodiment, the method further includes: when a speed of the driverless vehicle is detected to be greater than a set threshold, prohibiting responding to operation instructions of shifting, parking and door opening from the handheld control device.

In one embodiment, the method further includes: upon receiving a switching instruction of entering or exiting a handheld control, controlling the driverless vehicle to perform an automatic parking operation.

In one embodiment, the method further includes: in a control mode of the handheld control device, if an operation signal has not been received from the handheld control device within a set period, controlling the driverless vehicle to perform a braking operation.

In one embodiment, the method further includes: upon detecting a disconnection with the handheld control device, controlling the driverless vehicle to perform a stopping operation.

In a second aspect, an apparatus for controlling a driverless vehicle is provided according to an embodiment of the present disclosure, which includes:
a connection module configured to establish a connection with a handheld control device; and
a switching module configured to, upon receiving a switching instruction of entering a handheld control from the handheld control device, stop an automatic control of the driverless vehicle; and
an operation module configured to, upon receiving a vehicle control instruction from the handheld control device, perform an operation corresponding to the vehicle control instruction on the driverless vehicle.

In one embodiment, the apparatus further includes:
a first safety detection module configured to, when a speed of the driverless vehicle is detected to be greater than a set threshold, prohibit responding to operation instructions of shifting, parking and door opening from the handheld control device.

In one embodiment, the apparatus further includes:
a second safety detection module configured to, upon receiving a switching instruction of entering or exiting a handheld control, control the driverless vehicle to perform an automatic parking operation.

In one embodiment, the apparatus further includes:
a third safety detection module configured to, in a control mode of the handheld control device, if an operation signal has not been received from the handheld control device within a set period, control the driverless vehicle to perform a braking operation.

In one embodiment, the apparatus further includes:
a fourth safety detection module configured to, upon detecting a disconnection with the handheld control device, control the driverless vehicle to perform a stopping operation.

In a third aspect, a device for controlling a driverless vehicle is provided according to an embodiment of the present disclosure, which includes:
one or more processors;
a storage device configured to store one or more programs, wherein
the one or more programs, when executed by the one or more processors, cause the one or more processors to implement the method according to the first aspect.

In a possible implementation, the device structurally includes: a memory configured to store a program supporting the device to execute the method according to the first aspect, and a processor configured to execute the program stored in the memory. The device may further include a communication interface configured to communicate with another device or a communication network.

In a fourth aspect, a computer readable medium is provided according to an embodiment of the present disclosure, which stores computer software instructions used by a device for controlling a driverless vehicle , and includes a program for performing the method according to the first aspect.

In one of the above solutions, the embodiment of the present disclosure adopts the handheld control device to control the driverless vehicle, so that an operation can be performed when the driverless vehicle cannot travel automatically or the sensing module fails, thereby improving the convenience and safety of the user's operation.

The above summary is for the purpose of description, and is not intended to be limiting in any way. In addition to the illustrative aspects, embodiments and features described above, further aspects, embodiments and features of the present disclosure will be readily apparent with reference to the drawings and the following detailed descriptions.

### BRIEF DESCRIPTION OF THE DRAWINGS

In the drawings, unless otherwise specified, the same reference numeral refers to the same or similar parts or elements throughout the drawings. These drawings are not necessarily drawn to scale. It should be understood that these drawings depict only some embodiments disclosed in accordance with the present disclosure and should not be considered as limitations to the scope of the present disclosure.
FIG. 1 illustrates a flowchart of a method for controlling a driverless vehicle according to an embodiment of the present disclosure;
FIG. 2 illustrates a flowchart of a method for controlling a driverless vehicle according to an embodiment of the present disclosure;
FIG. 3 illustrates a front view of a handheld control device according to an embodiment of the present disclosure;
FIG. 4 illustrates a side view of a handheld control device according to an embodiment of the present disclosure;
FIG. 5 illustrates a schematic diagram of an accelerator control logic according to an embodiment of the present disclosure;
FIG. 6 illustrates a schematic diagram of a brake control logic according to an embodiment of the present disclosure;
FIG. 7 illustrates a schematic diagram of a steering control logic according to an embodiment of the present disclosure;
FIG. 8 illustrates a connection block diagram of an apparatus for controlling a driverless vehicle according to an embodiment of the present disclosure;
FIG. 9 illustrates a connection block diagram of an apparatus for controlling a driverless vehicle according to an embodiment of the present disclosure; and
FIG. 10 illustrates a block diagram of a device for controlling a driverless vehicle according to another embodiment of the present disclosure.

### DETAILED DESCRIPTION OF THE EMBODIMENTS

In the following, certain embodiments are briefly described. As will be recognized by persons skilled in the art, the described embodiments can be modified in a variety of different ways without departing from the spirit or scope of the present disclosure. Accordingly, the drawings and descriptions are regarded as illustrative in nature rather than restrictive. A method and apparatus for controlling a driverless vehicle are mainly provided according to the embodiments of the present disclosure, and the technical solutions are described through the following embodiments.

A method and apparatus for controlling a driverless vehicle are provided according to embodiments of the present disclosure, and the processing flow and principle thereof are described as follows.

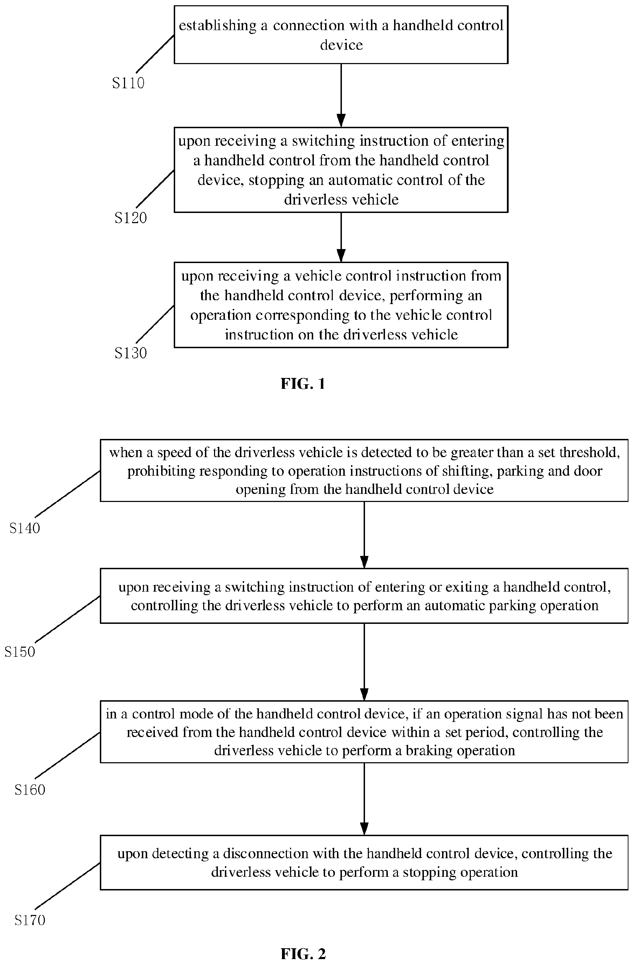

As shown in FIG. 1, a flowchart of a method for controlling a driverless vehicle is illustrated according to an embodiment of the present disclosure. In one embodiment, a method for controlling a driverless vehicle is applied to a control host of the driverless vehicle, and the method may include S110-S130.

In S110, a connection with a handheld control device is established.

In one embodiment, the handheld control device may be connected to a control host in the driverless vehicle through a data line or wirelessly. The handheld control device may take a form of a handle provided with a plurality of control keys. Operation instructions are sent to the control host in response to the user's operations on these control keys. The handheld control device may further include a touch screen, and a plurality of control elements are provided on a display interface of the touch screen. Operation instructions may be sent to the control host in response to the user's operations on these control elements.

In S120, upon receiving a switching instruction of entering a handheld control from the handheld control device, an automatic control of the driverless vehicle is stopped.

In one embodiment, in a case where the driverless vehicle cannot automatically control a driving state due to a failure thereof, the user may control the handheld control device to send a switching instruction to the control host. After a successful switching, the user may operate the driverless vehicle through the handheld control device, and at this time, the control host stops the automatic control of the driverless vehicle.

In S130, upon receiving a vehicle control instruction from the handheld control device, an operation corresponding to the vehicle control instruction is performed on the driverless vehicle.

In one embodiment, the handheld control device may perform automatic driving related controls on the driverless vehicle, such as acceleration, braking, steering, parking and the like. For example, the handheld control device may be provided with keys and an operating lever, through which the above operations can be performed.

As illustrated in FIG. 2, in one embodiment, the method further provides protective measures for the operation on the vehicle, that is, the method may further include S140-S170.

In S140, when a speed of the driverless vehicle is detected to be greater than a set threshold, responding to operation instructions of shifting, parking and door opening from the handheld control device is prohibited.

For example, the speed threshold may be set to 0.5m/s, wherein in order to prevent a misoperation by the user, a threshold for prohibiting a shifting operation may be set. When the speed of the vehicle is greater than the threshold, a shifting operation such as switching a drive gear (D gear) to a reverse gear (R gear) cannot be performed. At the same time, a parking operation (P gear) also cannot be performed.

In S150, upon receiving a switching instruction of entering or exiting a handheld control, the driverless vehicle is controlled to perform an automatic parking operation.

For example, in a case where the vehicle is currently in an automatic driving state, if an instruction of switching to a manual control is received, in order to prevent the vehicle from being in an uncontrolled state due to untimely switching, the control host controls the vehicle to perform a parking operation before the switching is finished, thereby preventing the occurrence of a danger. Similarly, if it is required to switch to the automatic driving mode, the parking operation may be performed at first.

In S160, in a control mode of the handheld control device, if an operation signal has not been received from the handheld control device within a set period, the driverless vehicle is controlled to perform a braking operation.

For example, in the control mode of the handheld control device, if the control host has not received an operation signal from the handheld control device within the set time, the handheld control device may fail at this time, or the driver does not operate in time, etc. In this case, for safety reasons, the control host controls the driverless vehicle to perform an automatic braking operation.

In S170, upon detecting a disconnection with the handheld control device, the driverless vehicle is controlled to perform a stopping operation.

For example, a braking operation is performed in time to prevent an accident when the control host detects a disconnection with the handheld control device due to a poor contact or an accidental dropping.

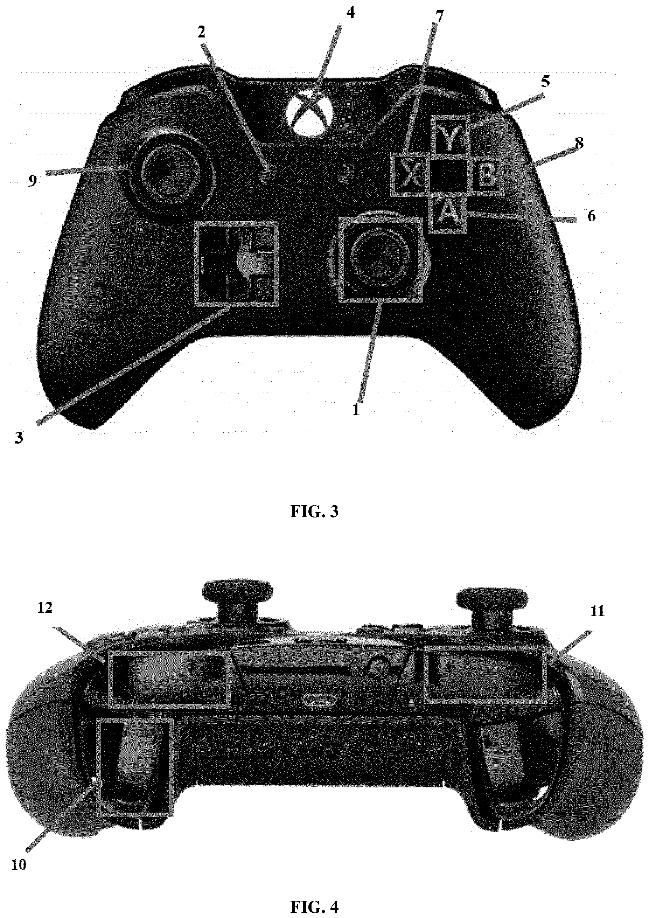

As shown in Figs. 3 to 4, schematic diagrams of a handheld control device are illustrated according to an embodiment of the present disclosure. In one embodiment, the handheld control device according to the embodiment of the present disclosure may be a handle. The handle is provided with various functional keys and operating rockers, including an accelerator and brake control rocker 1, an R/D (Reverse/Drive) gear shifting key 2, a parking control key 3, a signal lamp 4, a vehicle double flash control key 5, a vehicle door control key 6, a dipped headlight control key 7, a honking control key 8, a steering control rocker 9, an RT function key 10, an LB function key 11, and an RB function key 12.

The functions of the keys and rockers are introduced as follows.

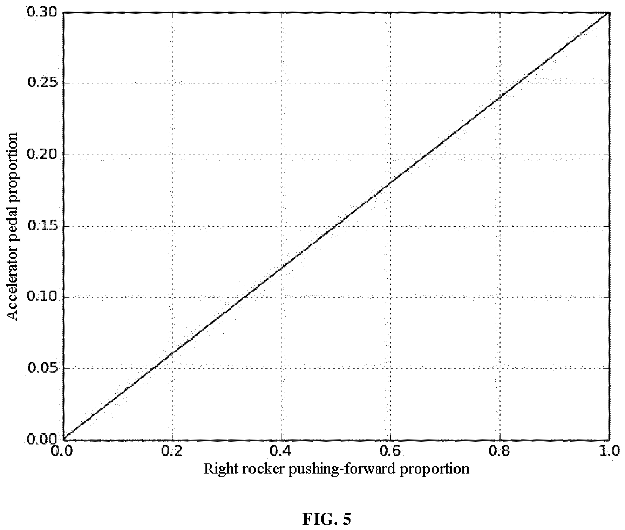

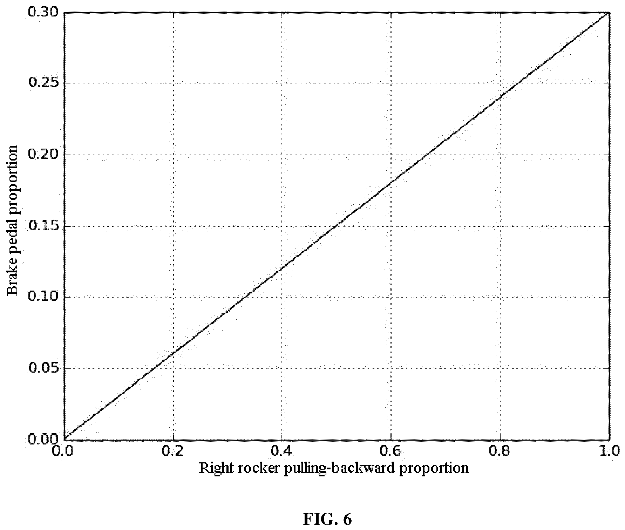

The accelerator and brake control rocker 1 is pushed forward when the accelerator needs to be used, and pulled backward when the brake needs to be used. As shown in Figs. 5 to 6, the accelerator and the brake both adopt the control logic of linear control. For safety reasons, when the rocker is pushed forward to the end, an accelerator pedal proportion is 30%, which is equivalent to a travel where the accelerator pedal of an ordinary vehicle is pressed up to 30%. Similarly, when the rocker is pulled backward to the end, the corresponding brake pedal proportion is 30%, which is equivalent to a travel where a brake pedal of an ordinary vehicle is pressed up to 30%.

The R/D gear shifting key 2 is configured to shift between an R gear and a D gear, and the default gear is the D gear, i.e., the drive gear. When the speed of the vehicle is lower than 0.5m/s and the handle brake pedal proportion is greater than 10%, the D gear is shifted to the R gear, i.e., the reverse gear, by pressing the R/D gear shifting key 2. When the R/D gear shifting key 2 is pressed again, the R gear is shifted back to the D gear. If any of the following three conditions is not satisfied, that is, the speed higher than 0.5m/s, the handle brake pedal proportion not more than 10%, and the vehicle in the parking mode, the shifting instruction will not be responded and the shifting in the parking state is ineffective.

In the handle mode, the default state of the parking control key 3 is a parking state. In the non-parking state, after the parking control key 3 is pressed, if the speed of the vehicle is lower than 0.5m/s, a response is made and a vehicle parking instruction is sent; otherwise, the vehicle parking instruction will not be responded. When the parking control key 3 is pressed again, the parking is released.

A signal lamp 4 is configured to indicate a current connection state. When the signal lamp is lit up, it indicates that a connection has been established and power has been supplied.

The vehicle double flash control key 5 is configured to control turning on and turning off of the double flash switch. If the vehicle double flash is ON, the double flash lamp is turned off by pressing the vehicle double flash control key 5. If the vehicle double flash is OFF, the double flash lamp is turned on by pressing the vehicle double flash control key 5.

The vehicle door control key 6 is configured to control opening and closing of the vehicle door. If the vehicle door is in an open state, it is closed by pressing the vehicle door control key 6. If the vehicle door is in a closed state, it is opened by pressing the vehicle door control key 6, when the speed of the vehicle is less than 0.1m/s and a tire steering angle is less than 10%.

The dipped headlight control key 7 is configured to control ON and OFF of a dipped headlight. If the vehicle compartment lamp is in an ON state, the dipped headlight is turned off by pressing the dipped headlight control key 7; and if the vehicle compartment lamp is in an OFF state, the dipped headlight is turned on by pressing the dipped headlight control key 7.

The honking control key 8 is configured to start honking. Honking is started when the honking control key 8 is pressed and held down, and honking is stopped when the honking control key 8 is released.

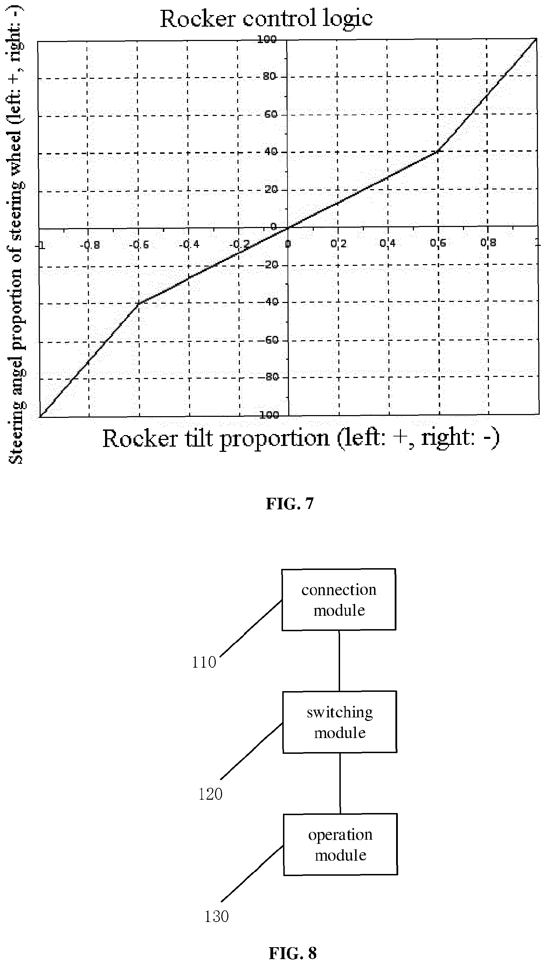

The steering control rocker 9 is configured to control a steering of the vehicle. If a left turn is required, the rocker is tilted to the left. If a turn right is required, the rocker is tilted to the right. As shown in FIG. 7, in one embodiment, a piecewise linear control of the steering angle may be performed. The key travel of 0-60% corresponds to the steering of 0-40%, and the key travel of 60-100% corresponds to the steering of 40-100%.

The RT function key 10 is configured to prevent a misoperation. For example, in the handle mode, any operation, except braking, cannot take effect unless the RT function key 10 is pressed firstly with a key travel of more than 55%.

The LB function key 11 and the RB function key 12 are configured to control entering and exiting of the handle mode. When the speed of the vehicle is less than 0.1m/s, and the LB function key 11 and the RB function key 12 are simultaneously pressed for three seconds, the handle vibrates for a long time to enter the handle mode.

In the handle mode, when the LB function key 11 and the RB function key 12 are simultaneously pressed for three seconds, and it is satisfied that: 1) the speed of the vehicle is less than 0.1m/s; and 2) the vehicle is detected as being in the parking state, the handle vibrates for a short time to exit the handle mode.

In one embodiment, the handle may also provide a drop protection function. Specifically, in the handle mode, for example, if the hardware suddenly drops for more than Is due to the reasons such as a poor contact, a drive failure, etc., the control host sends a braking signal, such as a braking signal having a brake pedal proportion of 20%. In addition, for safety reasons, even if the handle signal is restored after dropping, the handle control will not be automatically recovered. It is necessary to re-enter the handle mode by a manual takeover, before the handle control can be used again.

In one embodiment, the handle can further provide an automatic braking function, which may be realized as follows: under the condition that the RT enable key as well as the accelerator and brake control rocker of the handle are not operated, the vehicle will be automatically braked after Is. A default braking force may be of 7%, and the specific value can be adjusted according to the actual situation. In addition, in the automatic braking process, as long as it is detected that a braking signal is input to the RT enable key or the handle, the automatic braking is stopped and the control right is returned to the handle.

In one embodiment, the handle may also provide an authentication login function, which may be realized as follows: firstly, the human-computer interaction interface is clicked to initiate a handle authentication, and user information is input. After a successful authentication, it is required to press the RB function key 12 and the LB function key 11 simultaneously for three seconds to enter the handle mode within a specified time. If the specified time (for example 1 minute) passes without entering the handle mode, or the authentication fails, the handle mode cannot be entered. The authentication needs to be triggered again and must be successful to allow the handle mode to be entered.

According to an embodiment of the present disclosure, the handheld control device is adopted to control the driverless vehicle, so that an operation can be performed when the driverless vehicle cannot travel or sense automatically and the positioning module fails, thereby improving the convenience and safety of the user's operation.

As shown in FIG. 8, an apparatus for controlling a driverless vehicle according to an embodiment of the present disclosure, which includes:
a connection module 110 configured to establish a connection with a handheld control device; and
a switching module 120 configured to, upon receiving a switching instruction of entering a handheld control from the handheld control device, stop an automatic control of the driverless vehicle; and
an operation module 130 configured to, upon receiving a vehicle control instruction from the handheld control device, perform an operation corresponding to the vehicle control instruction on the driverless vehicle.

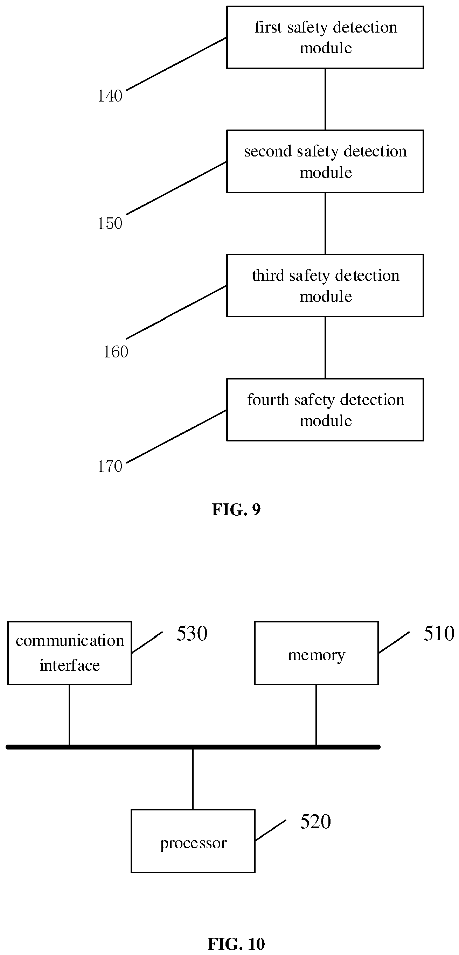

As illustrated in FIG. 9, in one embodiment, the apparatus further provides a safety detection function, that is, the apparatus may further include:
a first safety detection module 140 configured to, when a speed of the driverless vehicle is detected to be greater than a set threshold, prohibit responding to operation instructions of shifting, parking and door opening from the handheld control device;
a second safety detection module 150 configured to, upon receiving a switching instruction of entering or exiting a handheld control, control the driverless vehicle to perform an automatic parking operation;
a third safety detection module 160 configured to, in a control mode of the handheld control device, if an operation signal has not been received from the handheld control device within a set period, control the driverless vehicle to perform a braking operation; and
a fourth safety detection module 170 configured to, upon detecting a disconnection with the handheld control device, control the driverless vehicle to perform a stopping operation.

The principle of the apparatus in this embodiment is similar to that of the method in the embodiment described above, and will not be repeated here.

In another embodiment, a device for controlling a driverless vehicle is provided, as shown in FIG. 10. The device includes: a memory 510 and a processor 520, wherein a computer program executable on the processor 520 is stored in the memory 510. When the processor 520 executes the computer program, the method in the above embodiment is implemented. There may be one or more memories 510 and one or more processors 520.

The device further includes:
a communication interface 530 configured to communicate with an external device for a data interactive transmission.

The memory 510 may include a high-speed random access memory (RAM), and may also include a non-volatile memory, such as at least one disk memory.

If being implemented independently, the memory 510, the processor 520 and the communication interface 530 may be connected to each other through a bus and perform communications with each other. The bus may be an Industry Standard Architecture (ISA) bus, a Peripheral Component Interconnect (PCI) bus, an Extended Industry Standard Architecture (EISA) bus, or the like. The bus may be classified into an address bus, a data bus, a control bus, etc. For the convenience of representation, a single thick line is used in FIG. 10, but it does not mean that there is a single bus or one type of bus.

Alternatively, during implementation, if being integrated onto one chip, the memory 510, the processor 520 and the communication interface 530 can perform communications with each other through internal interfaces.

Among the descriptions herein, a description referring to terms 'one embodiment', 'some embodiments', 'example', 'specific example', 'some examples', or the like means that specific features, structures, materials, or characteristics described in conjunction with the embodiment(s) or example(s) are included in at least one embodiment or example of the present disclosure. Moreover, the specific features, structures, materials, or characteristics described may be incorporated in any one or more embodiments or examples in a suitable manner. In addition, persons skilled in the art may incorporate and combine different embodiments or examples described herein and the features thereof without a contradiction therebetween.

In addition, the terms 'first' and 'second' are used for descriptive purposes only and cannot be understood as indicating or implying a relative importance or implicitly pointing out the number of the technical features indicated. Thus, the features defined with 'first' and 'second' may explicitly or implicitly include at least one of the features. In the description of the present disclosure, 'a (the) plurality of' means 'two or more', unless otherwise specified explicitly.

Any process or method description in the flowchart or otherwise described herein may be understood to mean a module, a segment, or a part including codes of executable instructions of one or more steps for implementing a specific logical function or process, and the scope of preferred embodiments of the present disclosure includes additional implementations, wherein the functions may be performed without in a sequence illustrated or discussed, including being performed in a substantially simultaneous manner according to the functions involved or in a reverse sequence, which should be understood by skilled persons in the technical field to which the embodiments of the present disclosure belong.

At least one of the logics and the steps represented in the flowchart or otherwise described herein, for example, may be considered as a sequencing list of executable instructions for implementing logical functions, and may be embodied in any computer readable medium for being used by or in conjunction with an instruction execution system, an apparatus or a device (e.g., a computer-based system, a system including a processor, or any other system capable of fetching and executing instructions from the instruction execution system, the apparatus, or the device). Regarding this specification, the 'computer readable medium' may be any means that can contain, store, communicate, propagate, or transfer a program for being used by or in conjunction with the instruction execution system, the apparatus, or the device.

The computer readable medium described in the embodiments of the present disclosure may be a computer readable signal medium, a computer readable storage medium, or any combination thereof. More specific examples of the computer readable storage medium at least (non-exhaustive list) include: an electrical connection portion (electronic device) having one or more wires, a portable computer enclosure (magnetic device), a random access memory (RAM), a read only memory (ROM), an erasable editable read only memory (EPROM or flash memory), an optical fiber device, and a portable read only memory (CDROM). In addition, the computer readable storage medium may even be paper or any other suitable medium on which the program is printed, because the program can be electronically obtained, for example, by optically scanning the paper or other medium, and editing, interpreting, or processing in other suitable ways if necessary, and then stored in a computer memory.

In the embodiments of the present disclosure, a computer readable signal medium may include a data signal propagated in a baseband or as part of a carrier wave, and in which computer readable program codes are carried. Such propagated data signal may take many forms, including, but not limited to, an electromagnetic signal, an optical signal, or any suitable combination thereof. The computer readable signal medium may also be, besides the computer readable storage medium, any computer readable medium which can send, propagate, or transmit a program to be used by or in connection with the instruction execution system, the input method, or the device. The program codes in the computer readable medium may be transmitted with any suitable medium, including, but not limited to, a wireless medium, an electric wire, an optical cable, a Radio Frequency (RF) medium, etc., or any suitable combination thereof.

It should be understood that various parts of the present disclosure may be implemented by hardware, software, firmware, or combinations thereof. In the above embodiments, a plurality of steps or methods may be implemented by software or firmware stored in a memory and executed with a suitable instruction execution system. For example, if hardware is employed for implementation, like in another embodiment, the implementation may be made by any one or combinations of the following technologies known in the art: a discreet logic circuit having a logic gate circuit for implementing logic functions on data signals, an application specific integrated circuit having an appropriate combinational logic gate circuit, a programmable gate array (PGA), a field programmable gate array (FPGA), etc.

Persons of ordinary skill in the art can understand that all or part of the steps carried by the above method embodiments can be implemented by instructing relevant hardware through a program, wherein the program may be stored in a computer readable storage medium, and it includes one or combinations of the steps of the method embodiments when being executed.

In addition, the functional units in various embodiments of the present disclosure may be integrated into one processing module, or may be physically presented separately, or two or more units may be integrated into one module. The above integrated module may be implemented in the form of one of hardware and a software functional module. If the integrated module is implemented in the form of a software functional module and sold or used as an independent product, it may also be stored in a computer readable storage medium that may be a read only memory, a magnetic disk or an optical disk, etc.

Those described above are only embodiments of the present disclosure, but the protection scope of the present disclosure is not limited thereto. Within the technical scope revealed in the present disclosure, any skilled person familiar with the technical field can easily conceive of various changes or replacements thereof, which should be covered by the protection scope of the present disclosure. Therefore, the protection scope of the present disclosure should be subject to that of the accompanied claims.

## Claims

1. A method for controlling a driverless vehicle, comprising:
establishing (S110) a connection with a handheld control device;
upon receiving a switching instruction of entering a handheld control from the handheld control device, stopping (S120) an automatic control of the driverless vehicle; and
upon receiving a vehicle control instruction from the handheld control device, performing (S130) an operation corresponding to the vehicle control instruction on the driverless vehicle.

2. The method according to claim 1, further comprising:
when a speed of the driverless vehicle is detected to be greater than a set threshold, prohibiting (S140) responding to operation instructions of shifting, parking and door opening from the handheld control device.

3. The method according to claim 1, further comprising: upon receiving a switching instruction of entering or exiting a handheld control, controlling (S150) the driverless vehicle to perform an automatic parking operation.

4. The method according to claim 1, further comprising: in a control mode of the handheld control device, if an operation signal has not been received from the handheld control device within a set period, controlling (S160) the driverless vehicle to perform a braking operation.

5. The method according to claim 1, further comprising: upon detecting a disconnection with the handheld control device, controlling (S170) the driverless vehicle to perform a stopping operation.

6. An apparatus for controlling a driverless vehicle, comprising:
a connection module (110) configured to establish a connection with a handheld control device; and
a switching module (120) configured to, upon receiving a switching instruction of entering a handheld control from the handheld control device, stop an automatic control of the driverless vehicle; and
an operation module (130) configured to, upon receiving a vehicle control instruction from the handheld control device, perform an operation corresponding to the vehicle control instruction on the driverless vehicle.

7. The apparatus according to claim 6, further comprising:
a first safety detection module (140) configured to, when a speed of the driverless vehicle is detected to be greater than a set threshold, prohibit responding to operation instructions of shifting, parking and door opening from the handheld control device.

8. The apparatus according to claim 6, further comprising:
a second safety detection module (150) configured to, upon receiving a switching instruction of entering or exiting a handheld control, control the driverless vehicle to perform an automatic parking operation.

9. The apparatus according to claim 6, further comprising:
a third safety detection module (160) configured to, in a control mode of the handheld control device, if an operation signal has not been received from the handheld control device within a set period, control the driverless vehicle to perform a braking operation.

10. The apparatus according to claim 6, further comprising:
a fourth safety detection module (170) configured to, upon detecting a disconnection with the handheld control device, control the driverless vehicle to perform a stopping operation.

11. A device for controlling a driverless vehicle, comprising:
one or more processors (520); and
a storage device (510) configured to store one or more programs; wherein
the one or more programs, when executed by the one or more processors (520), cause the one or more processors (520) to implement the method according to any one of claims 1 to 5.

12. A computer-readable storage medium comprising computer executable instructions stored thereon, wherein the executable instructions, when executed by a processor, causes the processor to implement the method of any one of claims 1 to 5.

13. A computer program product comprising computer executable instructions stored thereon, wherein the executable instructions, when executed by a processor, causes the processor to implement the method of any one of claims 1 to 5.
